# EUROPEAN PATENT APPLICATION

(11) **EP 1 139 222 A1**
(43) Date of publication of application: **04.10.2001**
(21) Application number: 00400906.4
(22) Date of filing: 31.03.2000
(51) Int. Cl.: G06F 12/10, G06F 9/312

(54) **Prefetch for TLB cache**

(71) Applicant: Texas Instruments Incorporated, Dallas, Texas 75251 (US); Texas Instruments France, 06271 Villeneuve Loubet Cedex, Nice (FR)
(72) Inventor: D'inverno, Dominique, 06270 Villeneuve-Loubet (FR); Lasserre, Serge, 83600 Frejus (FR); Chauvel, Gerard, Ville Numero 20, 05500 Antibes (FR); Ferguson, Ed, Plano, Texas 75075 (US)
(74) Representative: Moncheny, Michel

(57) **Abstract**

A memory management unit (42) for use in a digital signal processor (30) or other processing device includes circuitry for obtaining a virtual to physical translation responsive to a prefetch command. The prefetch command can be initiated by performing a write access to a dummy register. Upon detecting the prefetch command, a TLB (60) is checked to see if the physical base address associated with a provided virtual address is currently available in the TLB (60). If not, walking table logic (78) performs a table lookup in main memory (34) to obtain the translation. The operations of the walking table logic (78) are performed without blocking continued operations by the DSP core (36).

## Description

### BACKGROUND OF THE INVENTION

### 1. TECHNICAL FIELD

This invention relates in general to electronic circuits and, more particularly, to computing devices.

### 2. DESCRIPTION OF THE RELATED ART

Many new electronic devices make uses of digital signal processors (DSPs) to perform computation-intensive tasks. In a multi-processor environment that includes DSPs, MPUs (microprocessor units) and shared memories, DSPs need to have a full memory management unit (MMU), similar to the functions found in MPUs today, in order to support protection mechanisms and dynamic memory management. In some devices, tasks can be dynamically downloaded on one of the processors and memory must be managed accordingly.

Accordingly, the need has arisen for the DSP to integrate some MMU hardware support, as tasks running on the DSP will reserve and free memory from the common memory pool, managed by a master processor.

The types of tasks performed by DSPs often have specific real time constraints due to the signals that they are processing. For example, DSPs are commonly used in devices where video and audio processing and voice recognition are supported. These functions can be significantly degraded if the DSP must suspend processing while waiting for an event to occur. Adding an MMU introduces a degree of non-deterministic behavior. When a TLB (translation lookaside buffer) cache does not contain the information corresponding to the current access (TLB-miss), the information must be retrieved from tables ("table walking"), located in main memory. This operation takes tens to hundreds of microprocessor cycles. While the MMU is walking the tables, the operation of the core is blocked, resulting in degraded or errant performance of the DSP.

Therefore, a need has arisen for a more predictable MMU design for use in a DSP or other processing device.

### BRIEF SUMMARY OF THE INVENTION

In the present invention, a multiple processor device comprises a main memory, a microprocessor coupled to the main memory, and a digital signal processor. The digital signal processor includes a processor core for executing instructions and a memory management unit. The memory management unit comprises circuitry for detecting a prefetch command associated with a virtual base address and circuitry for obtaining a translation of the virtual base address to a physical base address from the main memory responsive to the prefetch command while the processor core executes instructions.

The present invention provides significant advantages over the prior art. Since virtual base addresses can be prefetched, the latencies due to TLB misses can be eliminated or significantly reduced. Since the DSP core can continue to execute instructions while the table lookup of the physical address in main memory is performed, the latencies due to the prefetch instruction are minimized.

### BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:
Figure 1 illustrates a prior art MMU used in a microprocessor;
Figure 2 illustrates a physical address lookup by table walking;
Figure 3 illustrates a block diagram of a multiprocessor system; and
Figure 4 illustrates a MMU for use in a DSP or other processor in a multiprocessor system.

### DETAILED DESCRIPTION OF THE INVENTION

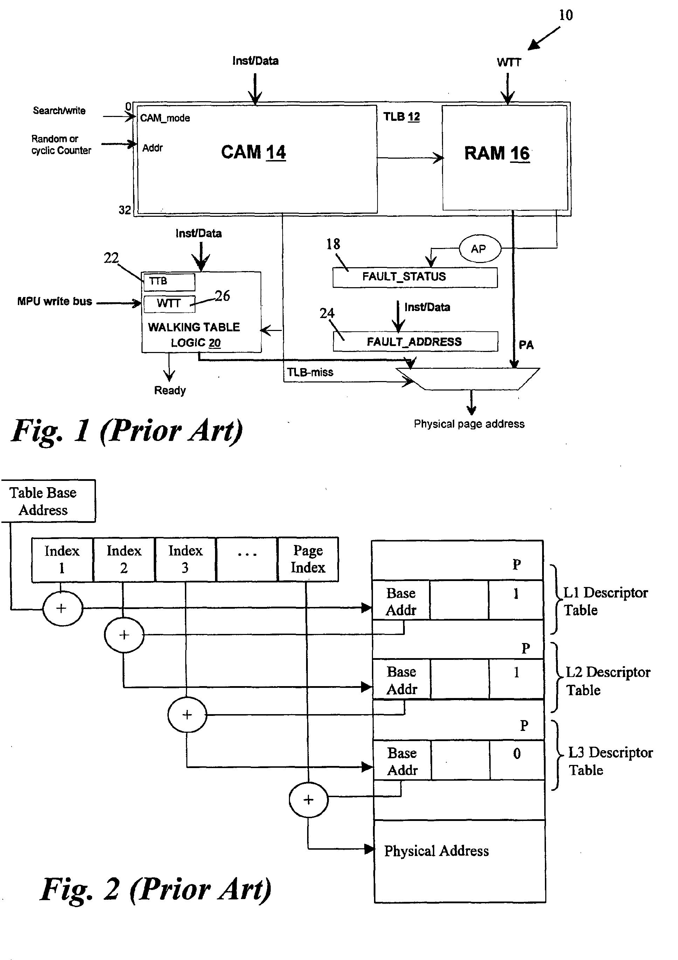

The present invention is best understood in relation to Figures 1-4 of the drawings, like numerals being used for like elements of the various drawings.

Figure 1 illustrates a block diagram of a state of the art MMU 10, as used in a microprocessing unit. The TLB (translation lookaside buffer) cache 12 includes a CAM 14 coupled to a RAM 16. RAM 16 caches upper address bits (base addresses) for physical addresses associated with virtual addresses cached by the TLB 12. For each physical base address in RAM 16, the CAM 12 stores the upper address bits of the corresponding virtual address bits associated with physical base address in a corresponding CAM address. Hence, the virtual base address stored in address "01" of CAM 14 corresponds to the physical base address in address "01" of RAM 16.

When the microprocessor core requests an virtual address, the TLB cache 12 is checked to see if the virtual base address is stored in the CAM 14. If it is (a cache "hit"), the physical base address is retrieved from the corresponding location in RAM 16. The physical base address is concatenated with the lower order bits of the virtual address (the "page index") to determine the complete physical address. This physical address is used to access a memory (hereinafter, the "main" memory). In addition to the physical base address, the RAM 16 may also store protection bits (AP) for each physical base address. The protection bits define how the corresponding memory page can be used (e.g., read-only, executable only, and so on). These bits are checked during the memory access. If, for example, a page is marked as read-only and the current access is a data write, an exception is returned to the CPU and the fault address status register is updated with the corresponding fault type - in this case, a write access permission fault. The address is also stored in the fault address register for debug or possible recovery. Similarly, a page marked as executable only would generate a fault on any data access.

The TLB cache 12, however, stores only a limited number of physical and virtual base addresses, generally much less than the possible number of virtual base addresses. Accordingly, as code is executed, some virtual addresses requested by the microprocessor will not be found in the TLB cache. This is referred to as a cache "miss". When a TLB cache miss occurs, a number of actions are taken. First, the corresponding physical base address for the virtual address requested by the microprocessor core is determined by the WTL (walking table logic) 20 in conjunction with a table stored in the main memory. During the table walking process, the processor core is placed in a wait condition, by disabling the Ready signal.

An example of the table walking process to derive a physical base address from a virtual base address is shown in Figure 2, with reference to the walking table logic of Figure 1. Walking table logic methods are well known in the art and Figure 2 provides a basic description of the process. The TTB register 22 of the walking table logic 20 holds an address that points to the base of a first level descriptor table stored in the external memory (not shown). The virtual address from the processing core 12 has several index fields, the number and position of which may vary depending upon the page type associated with the virtual address. The translation table base (TTB register) address and index1 from the virtual address are concatenated to identify a location in the first level descriptor table. This location will provide the walking table logic 20 with a base address and a "P bit" which informs the walking table logic whether the base address points to the physical memory location associated with the virtual address or whether it points to a lower level descriptor table. In the illustration of Figure 2, the location provides a base address to the second level descriptor table in the main memory 24.

This base address is concatenated with index2 from the virtual address to point to a location within the second level descriptor table. The location provides another base address and another P bit. In the illustration, the P bit indicates that the associated base address points to a location in a third level descriptor table. Thus, the base address is concatenated with index3 from the virtual address to point to a location within the third level descriptor table. This location provides a base address and an associated P bit, which indicates that the base address is associated with the desired physical address. The location also includes the permission bits associated with the physical address. Thus, the base address is concatenated with the page index from the virtual address to access the main memory.

It should be noted that while the example uses three descriptor tables to identify the base address of the desired physical address, any number of tables could be used. The number of tables used to determine a physical address may be dependent upon the page size associated with the physical address.

The base address used to form the physical address and the permission bits are stored temporarily in the WTT register 26 of walking table logic 52 before being loaded in the RAM part of the TLB cache. This is because, attribute bits, like permission or others, can be retrieved from the different level of tables. The last table is not always able to store all the information required on top of the physical base address. The WTT register 26 is used to load the CAM 14 with the virtual base address and the RAM 16 with the associated physical base address and permission bits at a location determined by replacement address circuitry (not shown). The replacement address circuitry may generate replacement addresses randomly or cyclicly.

In the event of a cache miss, hundreds of cycles may be used to perform the address translation. In general, this reduces the responsiveness of the system. However, in cases where real-time processing is involved, such as in many devices using a DSP, the non-deterministic behavior of the memory management unit can seriously degrade the performance of the device.

Many different TLB and WTL architectures are known in the art and may differ significantly from the design shown above.

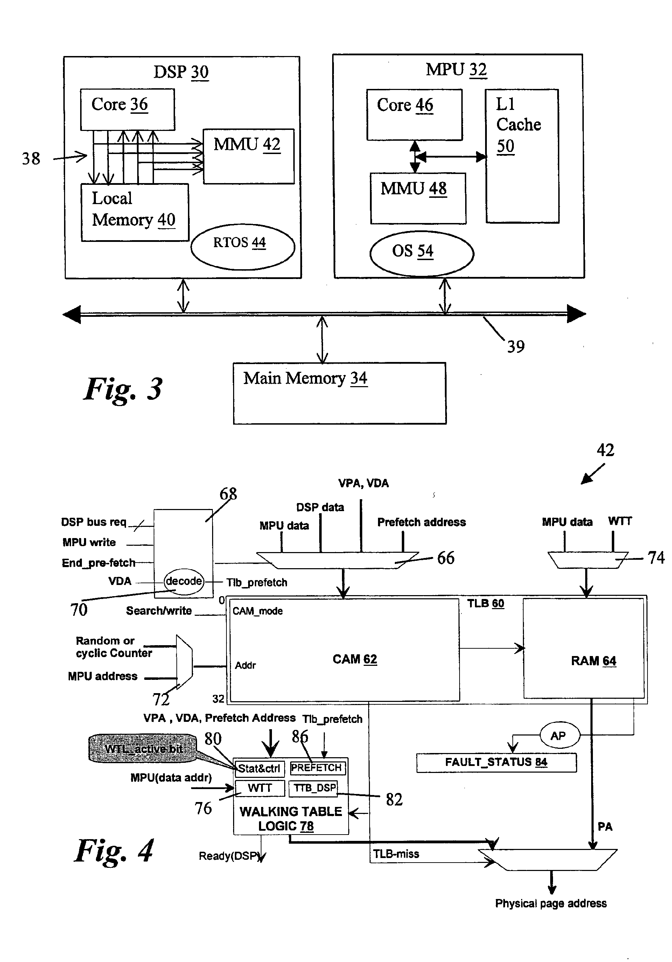

Figure 3 illustrates a basic block diagram of a computing device 28 using a DSP 30 and a microprocessing unit (MPU) 32. Other devices, such as co-processors or additional DSPs or microprocessing units could also be used in the computing device 30. Main memory 34 is coupled to the DSP 30 and MPU 32 via bus 34.

In basic diagram of Figure 3, the DSP 30 includes a processing core 36 and a plurality of buses 38 coupled to local memory 40, which may include, for example, a data memory/cache and an instruction memory/cache, or a unified data and instruction memory/cache. A memory management unit (MMU) 42 is coupled to buses 38 and to main memory 20 and MPU 32 through bus 39. A real-time operating system 44 controls operation of the DSP 30.

The MPU includes a processing core 46, coupled to an MPU 48 and an internal cache memory 50. MPU 32 is controlled by an operating system 52.

In operation, the processor core 36 of the DSP 30 can be of any design. Typically, the processing core of a DSP features a high-speed multiplier accumulator circuit (commonly referred to as a "MAC"). The local memory 40 stores data and instructions used in DSP operations. In the illustrated embodiment, the processing core 36 can directly address the local memory 40 using direct address decoding on its virtual addressing for high-speed access. The bus structure is designed to efficiently retrieve and store program and data information from or in local memory 40; however, different bus structures could also be used. Alternatively, the local memory 40 could be addressed through an MMU, although this would reduce the speed of local memory accesses. Although Figure 3 shows a single MMU 42, separate hardware can be provided for each bus to avoid conflicting accesses and to improve performance.

The MMU 42 provides the processing core 36 of DSP 30 with the ability to use virtual addressing to access the main memory 34. DSPs typically include one or more address generation units (AGUs) to perform one or more address calculations per instruction cycle, in order to retrieve instructions and to retrieve and store operands.

The ability to use virtual addressing significantly increases the functionality of a DSP. In particular, a DSP can run independent tasks in a task-protected environment. Linear (contiguous) memory space can be allocated to each task, giving the illusion that each task is the only task running in the system. This may be important in future systems, as most software will be written by third parties and will not be aware of the other applications.

In the illustrated embodiment, the MPU 32 in conjunction with the operating system 54 provides a unified memory management system which manages and allocates memory dynamically to the different processes running on each processor or DSP, providing a linear and protected memory space to all applications (processes). This unified memory management unit provides a linear memory space for all process and all processors despite the non-linear aspect of the corresponding physical addresses in the external shared memory 34. The unified memory management system can also provide an efficient and well-known protection mechanism.

Figure 4 illustrates a block diagram of an MMU, which could be used in conjunction with a DSP or other processor in a multi-processor system, with prefetch capabilities. In this embodiment, all DSP buses share the same TLB, although multiple TLBs could be used in an alternative implementation. The MMU 42 includes a TLB 60 having a CAM 62 and an associated RAM 64. A virtual base address can be presented to CAM 62 through multiplexer 66. Multiplexer 66 can select from one of four sources: (1) MPU data (from the MPU 32), (2) DSP data from DSP 30, (3) VPA (virtual program address)/VDA (virtual data address of multiple buses) buses (the program and data addresses from DSP core 36) or (4) Prefetch_address from the Prefetch_address register 86). Multiplexer 66 is controlled through control circuitry 68. A prefetch dummy register is visible in the DSP I/O space, which is symbolized by decode bubble 70. An entry in the CAM 62 can be selected through multiplexer 72, either from a random or cyclic counter or from the MPU 32. A search/write control signal indicates whether the data from multiplexer 66 is to be written to the address from multiplexer 72, or is to be used for a lookup to determine whether the TLB 60 holds the corresponding physical base address. Multiplexer 74 selects between data from the MPU 32 or from the WTT register 76 of walking table logic 78 for writing to RAM 64 in the event of a TLB replacement.

In an implementation with a DSP master, DSP data bus will need to be connected to the RAM 64 via multiplexer (74) to let the DSP reprogram the TLB content.

In addition to the WTT register, walking table logic 78 includes a status and control register 80 and a TTB_DSP register 82, which holds the address of the start of the translation tables. Status and control register 80 includes a WTL_active bit. Walking table logic 78 receives TLB_prefetch and a TLB_miss control signals and outputs a Ready control signal. The TLB_miss signal controls multiplexer 86, which selects the physical base address from either the walking table logic 78 or the TLB 60. Prefetch address register 86 stores a prefetch address.

In operation, the MMU 42 is capable of performing a prefetch operation to load a virtual base address and corresponding physical base address into the TLB 60, without blocking the DSP core 36. The DSP also monitors the replacement location in the TLB 60 by programming the victim entry by setting the replacement counter to the desired value. Accordingly, prefetch operations can be performed to prevent non-deterministic latencies associated with TLB misses, without blocking core operations, which could affect other real-time constraints associated with a task.

A prefetch command can be used anywhere within a task where it is anticipated that the task will need access to data or instructions, and the area corresponding to the data or instructions may not have a corresponding translation between virtual base address and physical base address stored in the TLB 60. The prefetch instruction forces the translation to be stored in the TLB 60 (if the translation is not already stored in the TLB) prior to an access request by the DSP core 36. Thus, when the task executes the access request, the translation will be in the TLB 60 and the potential TLB-miss will be avoided.

In the embodiment shown in Figure 4, a prefetch dummy register is visible in the DSP's I/O space. A write access to this I/O address is detected by control circuitry 68. In the illustrated embodiment, the write access is performed via a VDA bus coupled to the control circuitry 68 to initiate the prefetch operation. Responsive to the write access to the dummy register, the TLB_prefetch control signal is enabled by the control circuitry 68. At this same time, the prefetch virtual base address is available on the DSP data bus. Control circuitry 68 selects the DSP data bus via multiplexer 66 to present the prefetch virtual base address to CAM 62 and sets the search/write control signal to search. This causes the TLB 60 to detect whether the prefetch virtual base address is presently available in CAM 62 in a single cycle comparison. If the search results in a CAM hit, there is no need for the prefetch to continue, and the DSP continues its execution.

In the event of a CAM miss due to the search of the prefetch virtual base address, the walking table logic 78 is used to fetch the corresponding physical base address from main memory 34, responsive to the TLB_prefetch and TLB_miss control signal (both must be enabled to initiate the prefetch mechanism in the walking table logic 78). The value of the prefetch virtual base address is stored in Prefetch_address register 86. The WTB-active bit is set so that subsequent prefetch or normal TLB miss operations do not disturb the present prefetch command. For prefetch operations, the walking table logic 78 does not disable the Ready signal and therefore the DSP continues executing subsequent instructions in parallel with the prefetch TLB operation.

Once the walking table logic 78 completes the table walking operation to determine the translations for the virtual base address stored in the Prefetch_address register 86, the corresponding physical base address is stored in the TLB 60 and the WTL_active bit is disabled. The replacement policy for storing the result of the table walking operations in the TLB 60 can take several forms. In general, a random replacement scheme that randomly replaces an existing entry in the TLB 60 is not favorable, since a subsequent TLB prefetch or TLB miss could result in a prefetched translation being replaced prior to the actual access(es) to that address. A cyclic (or FIFO) replacement policy in the non-locked address range of the TLB 60 or a programmable replacement policy with the victim address provided by the DSP core 36 and stored in a register in the DSP address range. In cyclic mode, the victim counter increments itself only when a new translation is loaded into the TLB 60.

In one embodiment, programmable, cyclic and random replacement schemes are accommodated. Each time the DSP core 36 writes a new value to a victim counter (not shown), which stores the TLB address of the next entry to be replaced, the victim counter changes its counting mode from random to cyclic (FIFO) until it reaches the TLB upper limit. The victim counter mode can also be programmed to random or cyclic through a status bit in the Status and control register 80. The prefetch address information is stored into the CAM 62 and RAM 64 at the address stored in the victim counter, responsive to the End_prefetch control signal, which is enabled one the WTT register is loaded with the address value from the table walking operation.

The walking table logic 78 can only perform one table lookup at a time. Accordingly, if a TLB prefetch operation begins prior to the completion of a previous prefetch operation, the DSP 30 is put on hold (by disabling the Ready control signal) until the prior prefetch operation finishes. Alternatively, a register file or FIFO register could be used in place of Prefetch_address register 86 to queue prefetch requests, with requests being processed in the order in which they are received by the walking table logic 78.

Similarly, the DSP 30 is put on hold if there is a TLB miss on a DSP access to main memory. Once the TLB miss is serviced by the walking table logic 78, the prefetch operation can continue.

Other than the two situations outlined above, the DSP core 36 can continue to execute instructions while the prefetch operations are being processed. In general, both of these conditions can be eliminated or reduced by proper placement of the prefetch instructions in the code. The prefetch mechanism described allows TLB misses to be avoided completely, eliminating the unpredictable latencies associated with the misses, without delaying the execution of the task during the prefetch.

Typically, DSPs process data in sequential tasks in a given time period. At the end of a task, the DSP can be prepared for the next task, which will be triggered by an interrupt or message from the MPU. A queue (for example a register file or FIFO register) used as the prefetch register 86 is therefore an appropriate structure for holding multiple prefetch commands for preparing the TLB for the upcoming task. Other techniques, such as performing prefetch commands by looking ahead in the code for memory accesses could also be used.

While the MMU 42 is shown in an embodiment for translating virtual address to physical addresses, it could also be used for memory management without address translation. For example, the RAM 64 could store protection bits, which were checked responsive to an access from a physical address from core 36. If the physical address was not cached in CAM 62, the walking table logic 78 could prefetch the protection bits from main memory 34 to avoid a miss in the TLB 60, while the core 36 continues to execute instructions, as described above in connection with memory address translation.

It should be noted that throughout the specification, specific architectural features and detailed sizes for various memories, bus capacities, and so on, are provided, although the design for a particular DSP implementation could be varied. For example, the TLB design could be one of many used in microprocessor designs.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A processor, comprising:
a processor core for executing instructions; and
a memory management unit, said memory management unit comprising:
a cache for storing information associated with a set of addresses;
circuitry for detecting a prefetch command associated with an specified address from said processor core;
circuitry for obtaining information associated with said specified address responsive to said prefetch command while said processor core executes instructions and for storing said information in said cache.

2. The processor of claim 1 wherein said circuitry for obtaining information comprises circuitry for obtaining a translation of said address.

3. The processor of claim 2 wherein said circuitry for obtaining a translation comprises circuitry for translating a virtual address from said processor core to a physical address.

4. The processor of claim 1 wherein said circuitry for obtaining information comprises walking table logic.

5. The processor of claim 1 wherein said cache comprises a translation lookaside buffer.

6. The processor of claim 1 wherein said circuitry for obtaining information is enabled in response to a signal indicative of whether said information associated with said specified address is presently stored in said cache.

7. The processor of claim 1 wherein said detecting circuitry comprises circuitry for detecting a write access to a predetermined address.

8. The processor of claim 7 wherein said detecting circuitry comprises circuitry for detecting a write access to a predetermined address in I/O address space

9. The processor of claim 7 and comprising a multiplexer controlled by said circuitry for detecting for selecting a data bus from said processor core responsive to detecting said write access for providing said specified address to said cache.

10. The processor of claim 1 wherein said circuitry for obtaining information includes a register for storing said specified address.

11. The processor of claim 1 wherein said circuitry for obtaining information comprises a status register indicating whether said circuitry for obtaining information is presently obtaining information for a previous specified address.

12. The processor of claim 1 wherein said processor core is a digital signal processor core.

13. The processor of claim 12 wherein said register comprises a queue for storing multiple virtual base addresses.

14. A multiple processor device, comprising:
a main memory;
a microprocessor coupled to said main memory;
a digital signal processor comprising:
a processor core for executing instructions; and
a memory management unit, said memory management unit comprising:
a cache for storing information associated with respective addresses;
circuitry for detecting a prefetch command associated with a specified address;
circuitry for obtaining information associated with said specified address from said main memory responsive to said prefetch command while said processor core executes instructions and for storing said information associated with said specified address in said cache.

15. The multiple processor device of claim 14 wherein said specified address is a virtual address and said circuitry for obtaining information comprises circuitry for obtaining a translation of said virtual address to a physical address.

16. The multiple processor device of claim 15 circuitry for translating comprises walking table logic.

17. The multiple processor device of claim 14 wherein said cache comprises a translation lookaside buffer.

18. The multiple processor device of claim 14 wherein said circuitry for obtaining includes circuitry for determining whether said information associated with said specified address is presently stored in said cache.

19. The multiple processor device of claim 14 wherein said detecting circuitry comprises circuitry for detecting a write access to a predetermined address.

20. The multiple processor device of claim 19 wherein said detecting circuitry comprises circuitry for detecting a write access to a predetermined address in I/O address space.

21. The multiple processor device of claim 14 wherein said circuitry for obtaining includes a register for storing said virtual base address.

22. The multiple processor device of claim 21 wherein said register comprises a queue for storing multiple virtual base addresses.

23. A method of performing memory management in a processor, comprising:
executing instructions in a processor core;
storing information associated with a set of addresses in a cache;
detecting a prefetch command associated with an specified address from said processor core;
obtaining information associated with said specified address responsive to said prefetch command while said processor core executes instructions and storing said information associated with said specified address in said cache.

24. The method of claim 23 wherein said step of obtaining information comprises step of obtaining a translation of said address.

25. The method of claim 24 wherein said step of obtaining a translation comprises the step of translating a virtual address from said processor core to a physical address.

26. The method of claim 23 wherein said step of obtaining information comprises the step of obtaining information using walking table logic.

27. The method of claim 23 wherein said step of storing information comprises storing information in a translation lookaside buffer.

28. The method of claim 23 wherein said step of obtaining information is initiated in response to a signal indicative of whether said information associated with said specified address is presently stored in said cache.

29. The method of claim 23 wherein said detecting step comprises the step of detecting a write access to a predetermined address.

30. The method of claim 29 wherein said detecting step comprises the step of detecting a write access to a predetermined address in I/O address space

31. The method of claim 29 and further comprising the step of selecting a data bus from said processor core responsive to detecting said write access for providing said specified address to said cache.

32. The method of claim 23 wherein said step of obtaining information comprises providing status information indicating whether information is presently being obtained for a previous specified address.
